# FASCICULE DE BREVET EUROPEEN

(11) **EP 3 109 518 B1**
(45) Date de publication et mention de la délivrance du brevet: **23.12.2020**
(21) Numéro de dépôt: 16175901.4
(22) Date de dépôt: 23.06.2016
(51) Int. Cl.: F16J 15/06, F16J 15/12

(54) **AGENCEMENT DE JOINT D'ÉTANCHÉITÉ ET CARTER AVEC BRIDAGE D'UN FAISCEAU ÉLECTRIQUE**
MONTAGE VON DICHTUNGSFUGE UND GEHÄUSE MIT SPANNVORRICHTUNG FÜR KABELBÜNDEL
ASSEMBLY OF SEAL AND HOUSING WITH CLAMPING OF AN ELECTRICAL HARNESS

(30) Priorité: 23.06.2015 FR 1555767
(43) Date de publication de la demande: 28.12.2016
(73) Titulaire: Renault S.A.S., 92100 Boulogne-Billancourt (FR)
(72) Inventeur: CARBON, Alain, 78955 CARRIERES SOUS POISSY (FR); VINCENT, Franck, CHEVREUSE 78460 (FR)

(56) Documents cités:
- EP-A1- 1 400 735
- EP-A2- 1 408 203
- DE-A1- 10 105 625
- US-B1- 6 609 487

## Description

### Domaine technique de l'invention

L'invention concerne le domaine technique d'un joint d'étanchéité, notamment sous la forme d'un joint plat, destiné à assurer une étanchéité pour un fluide à l'interface entre des première et deuxième pièces d'un carter lorsque les première et deuxième pièces sont fixées l'une à l'autre.

En particulier mais non exclusivement, le domaine particulier visé est celui où le carter est un bloc moteur pour véhicule automobile, le fluide est de l'huile de lubrification d'un attelage mobile interne au bloc moteur et les deux pièces sont constituées par un carter cylindre et par un carter d'huile.

L'invention a pour objet un agencement selon la revendication 1, comprenant un carter, notamment de type bloc-moteur, ayant des première et deuxième pièces fixées l'une à l'autre de sorte à pouvoir renfermer un fluide dans un milieu intérieur au carter, notamment de l'huile pour lubrifier l'attelage mobile implanté dans le carter, au moins un organe fonctionnel situé dans le milieu intérieur, et au moins un tel joint d'étanchéité. Elle concerne aussi un véhicule automobile et un procédé de montage d'un tel agencement.

### État de la technique

Dans le domaine des véhicules automobiles, il est connu d'avoir recours à un moteur nécessitant l'utilisation d'une pompe à huile pilotée électroniquement via des signaux reçus et/ou émis en liaison avec un classiquement d'un mini faisceau électrique et d'une connectique devant se raccorder avec le câblage électrique du véhicule.

La pompe à huile pilotée se trouve dans le milieu interne au moteur tandis que le câblage électrique du véhicule est situé à l'extérieur du moteur. Ainsi, il existe une problématique de permettre de raccorder simplement et efficacement la pompe à huile pilotée au câblage électrique du véhicule.

A proximité immédiate de la pompe à huile pilotée se trouvent des volumes tournants tels que le vilebrequin, des bielles, des arbres d'équilibrage. Il est donc nécessaire de garantir une distance de sécurité entre le faisceau électrique de la pompe à huile pilotée et ces volumes tournants afin de garantir l'intégrité du système durant le fonctionnement du moteur.

Il est nécessaire de trouver une solution pour faire cheminer un faisceau électrique et sa connectique, à partir de la pompe à huile pilotée jusqu'au câblage du véhicule, de l'intérieur vers l'extérieur du moteur, sans compromettre l'étanchéité, tout en étant compatible avec l'architecture interne et externe du moteur et aux différentes contraintes de montage et de démontage. Le document EP-1408203-A2 décrit un joint d'étanchéité ayant un faisceau électrique et des moyens de support pour la fixation d'organes fonctionnels. Le document DE10105625-A1 décrit un joint d'étanchéité moulé selon le préambule de la revendication 1 ci-jointe.

Une solution existante consiste à laisser le câblage libre. Néanmoins dans ce cas, l'implantation de la connectique vers l'extérieur du moteur est contrainte pour minimiser la longueur du faisceau électrique et ainsi lever les différents risques liés à l'architecture, en particulier le fait que le parcours ne doit pas être situé à proximité des volumes tournants. Il existe un besoin de lever cette contrainte.

Bien que les problématiques sont présentées ici en relation avec un moteur de véhicule automobile et un organe fonctionnel constitué par une pompe à huile pilotée, elles peuvent indifféremment toucher d'autres types de carter et d'autres types d'organes fonctionnels, comme des moteurs industriels ou des turbines par exemple.

### Objet de l'invention

Le but de la présente invention est de proposer une solution technique qui remédie aux inconvénients et aux problématiques listés ci-dessus.

Dans ce dessein, l'invention concerne un agencement et une méthode selon le jeu de revendications ci-joint.

Dans d'autres modes de réalisation :
- les éléments de bridage sont agencés de sorte à maintenir au moins une partie du faisceau électrique dans le milieu intérieur au carter ;
- le joint d'étanchéité délimite une première partie configurée pour assurer la fonction d'étanchéité pour le fluide à l'interface entre les première et deuxième pièces du carter et une deuxième partie constitutive des éléments de bridage, les première et deuxième parties du joint d'étanchéité étant formées dans une pièce unique pour former un ensemble d'un seul tenant ;
- tout ou partie des première et deuxième parties du joint d'étanchéité sont formées dans une matière métalloplastique ;
- le faisceau électrique est connecté électriquement à l'organe fonctionnel et à un câblage électrique du véhicule automobile agencé dans un milieu extérieur au carter pour assurer une connexion électrique à travers le carter entre l'organe fonctionnel et le câblage électrique.
- l'organe fonctionnel est constitué par une pompe à huile pilotée électroniquement ayant un élément émetteur et/ou récepteur de signaux électroniques transmis entre la pompe et le câblage électrique du véhicule automobile par l'intermédiaire dudit au moins un faisceau électrique ;
- le faisceau électrique comprend des premiers éléments de connexion électrique agencés au niveau du milieu extérieur au carter et configurés de sorte à permettre une connexion électrique entre le faisceau électrique et le câblage électrique du véhicule automobile ;
- le faisceau électrique comprend des deuxièmes éléments de connexion électrique agencés au niveau du milieu intérieur du carter et configurés de sorte à permettre une connexion électrique entre le faisceau électrique et l'organe fonctionnel, et
- le carter est un bloc-moteur dont la première pièce est un carter cylindre et dont la deuxième pièce est un carter d'huile.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en coupe, de dessus, d'une partie d'un exemple d'agencement selon un aspect de l'invention,
- la figure 2 est une vue en coupe, de côté, de l'agencement de la figure 1,
- les figures 3 et 4 montrent en détails la partie A de la figure 2, respectivement avant et après une action consistant à rabattre des languettes de maintien pliables permettant la fixation selon les éléments de bridage.

### Description de modes préférentiels de réalisation

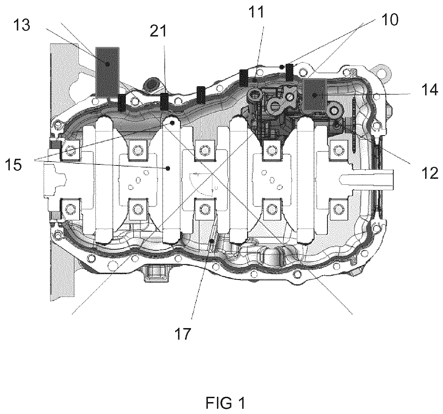

En référence aux figures 1 à 4, un mode de réalisation cocerne un joint d'étanchéité 10 destiné à assurer une étanchéité pour un fluide à l'interface entre des première et deuxième pièces 16 et 17 d'un carter lorsque les première et deuxième pièces 16, 17 sont fixées l'une à l'autre. Le joint d'étanchéité 10 est notamment sous la forme d'un joint plat, ce qui est particulièrement efficace à l'interface entre deux pièces d'un bloc-moteur par exemple, pour l'étanchéité à l'encontre d'un fluide liquide tel que de l'huile de lubrification.

Selon une caractéristique importante, le joint d'étanchéité 10 comprend, sur tout ou partie de sa longueur, des éléments de bridage 20 aptes à la fixation sur le joint d'étanchéité 10 de tout ou partie d'au moins un faisceau électrique 11 configuré pour assurer une connexion électrique à travers le carter entre un organe fonctionnel 12 situé dans un milieu intérieur 18 délimité par le carter et un câblage électrique (non représenté) agencé dans un milieu extérieur 19 au carter.

Selon un mode de réalisation particulier, les éléments de bridage 20 sont configurés de sorte à assurer une fixation démontable du faisceau électrique 11 sur le joint d'étanchéité 10. Cela présente l'avantage d'offrir la possibilité d'intervention sur le faisceau électrique 11 durant sa durée de vie, par exemple pour un remplacement en cas de nécessité.

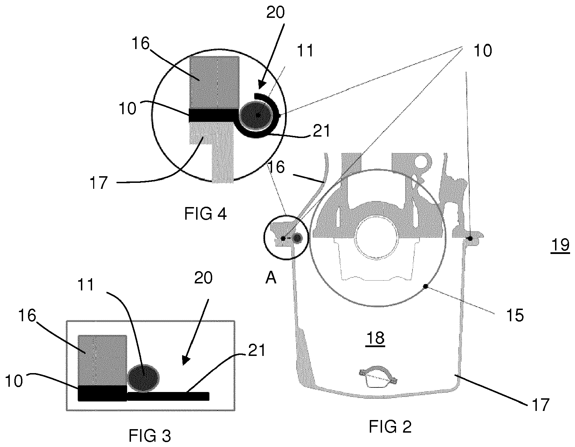

Comme cela est illustré sur la figure 2 notamment, les éléments de bridage 20 sont agencés de sorte à maintenir au moins une partie du faisceau électrique 11 dans le milieu intérieur 18 au carter.

De préférence mais sans toutefois conférer une quelconque limitation quant à la liberté de conception du joint d'étanchéité 10, celui-ci délimite une première partie configurée pour assurer la fonction d'étanchéité pour le fluide à l'interface entre les première et deuxième pièces 16, 17 du carter et une deuxième partie constitutive des éléments de bridage 20. Les première et deuxième parties du joint d'étanchéité 10 sont formées dans une pièce unique pour former un ensemble d'un seul tenant. Cette pièce unique peut être obtenue en une seule et même opération, par exemple consistant à injecter une matière telle qu'un élastomère dans un moule adapté.

Dans une variante particulièrement adaptée au domaine des véhicules automobiles, en particulier dans le cadre de l'étanchéité fluidique au niveau de l'interface entre deux pièces d'un bloc-moteur, tout ou partie des première et deuxième parties du joint d'étanchéité 10 sont formées dans une matière métalloplastique.

La matière métalloplastique comprend notamment une matière métallique comme de la tôle par exemple et une matière élastomère d'origine naturelle ou synthétique et ayant des propriétés d'élasticité. Cette nature de matière présente l'avantage d'une bonne efficacité d'étanchéité et d'une bonne résistance thermique et mécanique. Facultativement, la matière métalloplastique peut comprendre une matière plastique agencée de sorte à former les éléments de bridage 20 conjointement à un surmoulage de la matière métallique et à être elle-même surmoulée par la matière élastomère. L'avantage de cette solution est d'augmenter la robustesse.

Une variante conférant une bonne efficacité et une facilité de fabrication et d'utilisation pour un coût réduit prévoit que les éléments de bridage 20 comprennent une pluralité de languettes de maintien 21 pliables afin de les rabattre autour du faisceau électrique 11. Ces languettes de maintien 21 sont échelonnées le long de tout ou partie de la longueur du joint d'étanchéité 11 considérée au niveau de l'interface entre les première et deuxième pièces 16, 17 du carter fixées l'une à l'autre, afin de maintenir régulièrement le faisceau électrique 11 sur toute la partie de sa longueur située au niveau de cette interface.

Les figures 3 et 4 montrent en détails la partie A de la figure 2, respectivement avant et après une action consistant à rabattre les languettes de maintien 21 pliables permettant la fixation du faisceau électrique 11.

Sur les figures 1 à 4, l'agencement pour véhicule automobile comprend :
- un carter, notamment de type bloc-moteur, ayant les première et deuxième pièces 16, 17 fixées l'une à l'autre de sorte à renfermer le fluide dans le milieu intérieur 18 au carter,
- au moins un tel organe fonctionnel 12 situé dans le milieu intérieur 18,
- au moins un tel joint d'étanchéité 10,
- et au moins un faisceau électrique 11 fixé sur le joint d'étanchéité 10 par ses éléments de bridage 20 et connecté électriquement à l'organe fonctionnel 12 et au câblage électrique (non représenté) du véhicule automobile agencé dans un milieu extérieur 19 au carter pour assurer une connexion électrique à travers le carter entre l'organe fonctionnel 12 et le câblage électrique.

Le fluide vis-à-vis duquel le joint d'étanchéité 10 remplit sa fonction d'étanchéité peut notamment être de l'huile apte à lubrifier un attelage mobile 15 implanté dans le carter, c'est-à-dire dans le milieu intérieur 18. L'attelage mobile 15 comprend par exemple un vilebrequin, des bielles, des arbres d'équilibrage...

Ainsi, il sera possible de fournir un véhicule automobile comprenant au moins un tel agencement et un câblage électrique extérieur au carter et connecté électriquement à l'organe fonctionnel 12 par l'intermédiaire dudit au moins un faisceau électrique 11 fixé au joint d'étanchéité 10 par ses éléments de bridage 20.

Selon un mode de réalisation particulier, l'organe fonctionnel 12 est notamment constitué par une pompe à huile pilotée électroniquement ayant un élément émetteur et/ou récepteur de signaux électroniques transmis entre la pompe et le câblage électrique du véhicule par l'intermédiaire dudit au moins un faisceau électrique 11.

Le faisceau électrique 11 comprend des premiers éléments de connexion électrique 13 agencés au niveau du milieu extérieur 19 au carter et configurés de sorte à permettre une connexion électrique entre le faisceau électrique 11 et le câblage électrique du véhicule. Les premiers éléments de connexion électrique 13 peuvent notamment être configurés de sorte à pouvoir supprimer cette connexion électrique lorsque cela est nécessaire, puis à pouvoir la rendre active à nouveau à souhait. Les premiers éléments de connexion électrique 13 sont de nature quelconque dès lors qu'elle est adaptée à la fonction recherchée.

Selon un mode de réalisation tel qu'illustré, le faisceau électrique 11 comprend des deuxièmes éléments de connexion électrique 14 agencés au niveau du milieu intérieur 18 du carter et configurés de sorte à permettre une connexion électrique entre le faisceau électrique 11 et l'organe fonctionnel 12. Les deuxièmes éléments de connexion électrique 14 peuvent notamment être configurés de sorte à pouvoir supprimer cette connexion électrique lorsque cela est nécessaire, puis à pouvoir la rendre active à nouveau à souhait. Les deuxièmes éléments de connexion électrique 14 sont de nature quelconque dès lors qu'elle est adaptée à la fonction recherchée et sont distincts des premiers éléments de connexion électrique 13.

En particulier, il est envisageable d'aménager les premiers éléments de connexion électrique 13 et les deuxièmes éléments de connexion électrique respectivement aux deux extrémités opposées du faisceau électrique 11 dont le corps, à un endroit de sa longueur, est destiné à traverser l'épaisseur du carter au niveau de l'interface entre les deux pièces 16, 17.

Alternativement, le faisceau électrique 11 fixé sur le joint d'étanchéité 10 via les éléments de bridage 20 peut venir directement avec l'organe fonctionnel 12 sans connexion électrique séparable entre ces deux éléments. Cette solution alternative favorise le contact électrique au détriment de l'aspect logistique et de la facilité du processus de montage en usine.

Le procédé de montage de l'agencement précédemment décrit peut alors comprendre les étapes suivantes :
- mise en position du carter cylindre (correspondant ici à la première pièce 16) dans une position dans laquelle sa face inférieure, constitutive de l'interface avec le carter d'huile (correspondant ici à la deuxième pièce 17), est orientée vers le haut,
- montage de l'organe fonctionnel 12 dans le carter cylindre,
- positionnement du joint d'étanchéité 10 au niveau de la face inférieure du carter cylindre,
- connexion électrique du faisceau électrique 11 avec l'organe fonctionnel 12, notamment via les deuxièmes éléments de connexion électrique 14 lorsqu'ils sont prévus,
- positionnement et fixation du faisceau électrique 11 au joint d'étanchéité 10 en utilisant les éléments de bridage 20,
- mise en position et fixation du carter d'huile avec le carter cylindre.

La solution présentée dans ce document permet de faire cheminer un faisceau électrique 11 et sa connectique, à partir d'une pompe à huile pilotée jusqu'au câblage du véhicule, de l'intérieur vers l'extérieur du moteur, sans compromettre l'étanchéité, tout en étant compatible avec l'architecture interne et externe du moteur et aux différentes contraintes de montage et de démontage. Elle est adaptable à d'autres types de carter, d'organe fonctionnel ou de fluide...

## Revendications

1. Agencement adapté pour véhicule automobile, comprenant un carter, notamment de type bloc-moteur, ayant des première et deuxième pièces (16, 17) fixées l'une à l'autre de sorte à pouvoir renfermer un fluide dans un milieu intérieur (18) au carter, notamment de l'huile pour lubrifier un attelage mobile (15) situé dans le milieu intérieur (18), au moins un organe fonctionnel (12) situé dans le milieu intérieur (18), au moins un joint d'étanchéité (10), notamment sous la forme d'un joint plat, destiné à assurer une étanchéité pour un fluide à l'interface entre des première et deuxième pièces (16, 17) lorsque les première et deuxième pièces (16, 17) sont fixées l'une à l'autre, le joint d'étanchéité (10) comprenant, sur tout ou partie de sa longueur, des éléments de bridage (20) fixant sur le joint d'étanchéité (10) tout ou partie d'au moins un faisceau électrique (11) adapté pour assurer une connexion électrique à travers le carter entre l'organe fonctionnel (12) situé dans le milieu intérieur (18) délimité par le carter et un câblage électrique agencé dans un milieu extérieur (19) au carter, les éléments de bridage (20) comprenant une pluralité de languettes de maintien (21) pliées de sorte qu'elles sont rabattues autour du faisceau électrique (11), échelonnées le long de tout ou partie de la longueur du joint d'étanchéité (10) considérée au niveau de l'interface entre les première et deuxième pièces (16, 17) du carter fixées l'une à l'autre, **caractérisé en ce que** les éléments de bridage (20) sont configurés de sorte à assurer une fixation démontable du faisceau électrique (11) sur le joint d'étanchéité (10), les éléments de bridage (20) étant déformables entre une position pliée afin de venir à recouvrement du faisceau électrique (11) en l'entourant approximativement au trois quart, et une position dépliée, dans laquelle les éléments de bridage (20) s'étendent sensiblement linéairement au prolongement de la partie du joint d'étanchéité dédiée à assurer l'étanchéité des première et deuxième pièces (16, 17).

2. Agencement selon la revendication précédente, dans lequel les éléments de bridage (20) sont agencés de sorte à maintenir au moins une partie du faisceau électrique (11) dans le milieu intérieur (18) au carter.

3. Agencement selon la revendication 1 ou 2, dans lequel le joint d'étanchéité (10) délimite une première partie configurée pour assurer la fonction d'étanchéité pour le fluide à l'interface entre les première et deuxième pièces (16, 17) du carter et une deuxième partie constitutive des éléments de bridage (20), les première et deuxième parties du joint d'étanchéité (10) étant formées dans une pièce unique pour former un ensemble d'un seul tenant.

4. Agencement selon la revendication précédente, dans lequel tout ou partie des première et deuxième parties du joint d'étanchéité (10) sont formées dans une matière métalloplastique.

5. Agencement selon l'une quelconque des revendications précédentes, dans lequel le faisceau électrique (11) est connecté électriquement à l'organe fonctionnel (12) et à un câblage électrique de véhicule automobile agencé dans un milieu extérieur (19) au carter pour assurer une connexion électrique à travers le carter entre l'organe fonctionnel (12) et le câblage électrique.

6. Agencement selon l'une quelconque des revendications précédentes, dans lequel l'organe fonctionnel (12) est constitué par une pompe à huile pilotée électroniquement ayant un élément émetteur et/ou récepteur de signaux électroniques transmis entre la pompe et le câblage électrique du véhicule automobile par l'intermédiaire dudit au moins un faisceau électrique (11).

7. Agencement selon la revendication 5 ou 6, dans lequel le faisceau électrique (11) comprend des premiers éléments de connexion électrique (13) agencés au niveau du milieu extérieur (19) au carter et configurés de sorte à permettre une connexion électrique entre le faisceau électrique (11) et le câblage électrique du véhicule automobile.

8. Agencement selon l'une quelconque des revendications 5 à 7, dans lequel le faisceau électrique (11) comprend des deuxièmes éléments de connexion électrique (14) agencés au niveau du milieu intérieur (18) du carter et configurés de sorte à permettre une connexion électrique entre le faisceau électrique (11) et l'organe fonctionnel (12).

9. Agencement selon l'une quelconque des revendications 1 à 8, dans lequel le carter est un bloc-moteur dont la première pièce (16) est un carter cylindre et dont la deuxième pièce (17) est un carter d'huile.

10. Véhicule automobile comprenant au moins un agencement selon l'une quelconque des revendications 1 à 9 et un câblage électrique extérieur au carter et connecté électriquement à l'organe fonctionnel (12) par l'intermédiaire dudit au moins un faisceau électrique (11) fixé au joint d'étanchéité (10) par ses éléments de bridage (20).

11. Procédé de montage d'un agencement selon la revendication 9 comprenant les étapes suivantes :
- mise en position du carter cylindre dans une position dans laquelle sa face inférieure, constitutive de l'interface avec le carter d'huile, est orientée vers le haut,
- montage de l'organe fonctionnel (12) dans le carter cylindre,
- positionnement du joint d'étanchéité (10) au niveau de la face inférieure du carter cylindre,
- connexion électrique du faisceau électrique (11) avec l'organe fonctionnel (12),
- positionnement et fixation du faisceau électrique (11) au joint d'étanchéité (10) en utilisant les éléments de bridage (20),
- mise en position et fixation du carter d'huile avec le carter cylindre.

## Patentansprüche

1. Anordnung, die für ein Kraftfahrzeug geeignet ist, die ein Gehäuse, insbesondere von der Art Motorblock, das erste und zweite Bauteile (16, 17) hat, die aneinander befestigt sind, um ein Fluid, insbesondere Öl zum Schmieren eines in der Innenumgebung (18) befindlichen Kurbeltriebs (15), in einer Umgebung (18) innerhalb des Gehäuses einschließen zu können, mindestens ein in der Innenumgebung (18) befindliches Funktionsorgan (12) und mindestens eine Dichtung (10), insbesondere in Form einer Flachdichtung, enthält, die dazu bestimmt ist, eine Dichtheit für ein Fluid an der Schnittstelle zwischen ersten und zweiten Bauteilen (16, 17) zu gewährleisten, wenn die ersten und zweiten Bauteile (16, 17) aneinander befestigt sind, wobei die Dichtung (10) über ihre ganze oder einen Teil ihrer Länge Spannelemente (20) aufweist, die den ganzen oder einen Teil mindestens eines Kabelstrangs (11) auf der Dichtung (10) befestigen, der geeignet ist, um eine elektrische Verbindung durch das Gehäuse hindurch zwischen dem in der vom Gehäuse begrenzten Innenumgebung (18) befindlichen Funktionsorgan (12) und einer elektrischen Verkabelung zu gewährleisten, die in einer Umgebung (19) außerhalb des Gehäuses angeordnet ist, wobei die Spannelemente (20) eine Vielzahl von Haltezungen (21) enthalten, die umgebogen werden, damit sie um den Kabelstrang (11) umgeschlagen sind, verteilt entlang der ganzen oder eines Teils der betrachteten Dichtung (10) im Bereich der Schnittstelle zwischen den aneinander befestigten ersten und zweiten Bauteilen (16, 17) des Gehäuses, **dadurch gekennzeichnet, dass** die Spannelemente (20) so konfiguriert sind, dass sie eine abnehmbare Befestigung des Kabelstrangs (11) auf der Dichtung (10) gewährleisten, wobei die Spannelemente (20) zwischen einer umgebogenen Stellung, um den Kabelstrang (11) zu bedecken, indem sie ihn in etwa zu Dreiviertel umgeben, und einer auseinandergezogenen Stellung verformbar sind, in der die Spannelemente (20) sich im Wesentlichen linear zur Verlängerung des Teils der Dichtung erstrecken, der dazu bestimmt ist, die Dichtheit der ersten und zweiten Bauteile (16, 17) zu gewährleisten.

2. Anordnung nach dem vorhergehenden Anspruch, wobei die Spannelemente (20) so angeordnet sind, dass sie mindestens einen Teil des Kabelstrangs (11) in der Umgebung (18) innerhalb des Gehäuses halten.

3. Anordnung nach Anspruch 1 oder 2, wobei die Dichtung (10) einen ersten Teil, der konfiguriert ist, die Dichtheitsfunktion für das Fluid an der Schnittstelle zwischen dem ersten und zweiten Bauteil (16, 17) des Gehäuses zu gewährleisten, und einen zweiten Teil begrenzt, der die Spannelemente (20) bildet, wobei die ersten und zweiten Teile der Dichtung (10) aus einem einzigen Bauteil geformt sind, um eine einstückige Einheit zu formen.

4. Anordnung nach dem vorhergehenden Anspruch, wobei alles oder ein Teil der ersten und zweiten Teile der Dichtung (10) aus einem metalloplastischen Werkstoff geformt werden.

5. Anordnung nach einem der vorhergehenden Ansprüche, wobei der Kabelstrang (11) elektrisch mit dem Funktionsorgan (12) und mit einer elektrischen Kraftfahrzeug-Verkabelung verbunden ist, die in einer Umgebung (19) außerhalb des Gehäuses angeordnet ist, um eine elektrische Verbindung durch das Gehäuse hindurch zwischen dem Funktionsorgan (12) und der elektrische Verkabelung zu gewährleisten.

6. Anordnung nach einem der vorhergehenden Ansprüche, wobei das Funktionsorgan (12) aus einer elektronisch gesteuerten Ölpumpe besteht, die ein Empfangs- und/oder Sendeelement von elektronischen Signalen hat, die zwischen der Pumpe und der elektrischen Verkabelung des Kraftfahrzeugs mittels des mindestens einen Kabelstrangs (11) übertragen werden.

7. Anordnung nach Anspruch 5 oder 6, wobei der Kabelstrang (11) erste elektrische Verbindungselemente (13) enthält, die im Bereich der Umgebung (19) außerhalb des Gehäuses angeordnet und so konfiguriert sind, dass sie eine elektrische Verbindung zwischen dem Kabelstrang (11) und der elektrische Verkabelung des Kraftfahrzeugs erlauben.

8. Anordnung nach einem der Ansprüche 5 bis 7, wobei der Kabelstrang (11) zweite elektrische Verbindungselemente (14) enthält, die im Bereich der Innenumgebung (18) des Gehäuses angeordnet und so konfiguriert sind, dass sie eine elektrische Verbindung zwischen dem Kabelstrang (11) und dem Funktionsorgan (12) erlauben.

9. Anordnung nach einem der Ansprüche 1 bis 8, wobei das Gehäuse ein Motorblock ist, dessen erstes Bauteil (16) ein Zylindergehäuse und dessen zweites Bauteile (17) eine Ölwanne ist.

10. Kraftfahrzeug, das mindestens eine Anordnung nach einem der Ansprüche 1 bis 9 und eine elektrische Verkabelung außerhalb des Gehäuses und elektrisch mit dem Funktionsorgan (12) mittels des mindestens einen Kabelstrangs (11) verbunden enthält, der an der Dichtung (10) durch ihre Spannelemente (20) befestigt ist.

11. Verfahren zum Einbau einer Anordnung nach Anspruch 9, das die folgenden Schritte enthält:
- Instellungbringen des Zylindergehäuses in einer Stellung, in der seine die Schnittstelle mit der Ölwanne bildende Unterseite nach oben gerichtet ist,
- Einbau des Funktionsorgans (12) in das Zylindergehäuse,
- Positionierung der Dichtung (10) im Bereich der Unterseite des Zylindergehäuses,
- elektrische Verbindung des Kabelstrangs (11) mit dem Funktionsorgan (12),
- Positionierung und Befestigung des Kabelstrangs (11) an der Dichtung (10) unter Verwendung der Spannelemente (20),
- Instellungbringen und Befestigung der Ölwanne mit dem Zylindergehäuse.

## Claims

1. Arrangement suitable for a motor vehicle, comprising a casing, in particular of the engine block type, having first and second parts (16, 17) that are fastened to one another so as to be able to enclose a fluid in an internal environment (18) of the casing, in particular oil for lubricating a mobile linkage (15) located in the internal environment (18), at least one functional member (12) located in the internal environment (18), at least one seal (10), in particular in the form of a flat gasket, intended to establish a seal with respect to a fluid at the interface between the first and second parts (16, 17) when the first and second parts (16, 17) are fastened to one another, the seal (10) comprising, over all or part of its length, clamping elements (20) fastening on to the seal (10) all or part of at least one wiring harness (11) that is suitable for establishing an electrical connection through the casing between the functional member (12) located in the internal environment (18) bounded by the casing and electrical wiring arranged in an environment (19) outside the casing, the clamping elements (20) comprising a plurality of holding tabs (21) that are bent so as to be folded down around the wiring harness (11), staggered along all or part of the length of the seal (10) considered at the interface between the first and second parts (16, 17) of the casing that are fastened to one another, **characterized in that** the clamping elements (20) are configured so as to detachably fasten the wiring harness (11) to the seal (10), the clamping elements (20) being deformable between a bent position so as to cover the wiring harness (11) by wrapping approximately three-quarters of the way around it, and a straightened position in which the clamping elements (20) extend essentially linearly from that part of the seal that is intended to seal the first and second parts (16, 17).

2. Arrangement according to the preceding claim, wherein the clamping elements (20) are arranged so as to hold at least one part of the wiring harness (11) in the internal environment (18) of the casing.

3. Arrangement according to Claim 1 or 2, wherein the seal (10) bounds a first portion that is configured to establish the seal for the fluid at the interface between the first and second parts (16, 17) of the casing, and a second portion forming the clamping elements (20), the first and second portions of the seal (10) being formed in a single piece so as to form a unitary assembly.

4. Arrangement according to the preceding claim, wherein all or part of the first and second portions of the seal (10) are made of a metalloplastic material.

5. Arrangement according to any one of the preceding claims, wherein the wiring harness (11) is electrically connected to the functional member (12) and to an electrical wiring of a motor vehicle arranged in an environment (19) outside the casing so as to provide an electrical connection through the casing between the functional member (12) and the electrical wiring.

6. Arrangement according to any one of the preceding claims, wherein the functional member (12) consists of an electronically controlled oil pump having an element that transmits and/or receives electronic signals transmitted between the pump and the electrical wiring of the motor vehicle via said at least one wiring harness (11).

7. Arrangement according to Claim 5 or 6, wherein the wiring harness (11) comprises first electrical connection elements (13) arranged in the environment (19) outside the casing and configured so as to permit an electrical connection between the wiring harness (11) and the electrical wiring of the motor vehicle.

8. Arrangement according to any one of Claims 5 to 7, wherein the wiring harness (11) comprises second electrical connection elements (14) arranged in the internal environment (18) of the casing and configured so as to permit an electrical connection between the wiring harness (11) and the functional member (12).

9. Arrangement according to any one of Claims 1 to 8, wherein the casing is an engine block whose first part (16) is a crankcase and whose second part (17) is an oil sump.

10. Motor vehicle comprising at least one arrangement according to any one of Claims 1 to 9 and an electrical wiring that is outside the casing and is electrically connected to the functional member (12) via said at least one wiring harness (11) fastened to the seal (10) by its clamping elements (20).

11. Method for installing an arrangement according to Claim 9, comprising the following steps:
- positioning the crankcase in a position in which its lower face, forming the interface with the oil sump, is oriented upwards,
- mounting the functional member (12) in the crankcase,
- positioning the seal (10) at the lower face of the crankcase,
- electrically connecting the wiring harness (11) to the functional member (12),
- positioning and fastening the wiring harness (11) to the seal (10) using the clamping elements (20),
- positioning and fastening the oil sump to the crankcase.
